Europäisches Patentamt

European Patent Office

Office européen des brevets

(19)

(11) Veröffentlichungsnummer: **0 132 713**
**B1**

(12) **EUROPÄISCHE PATENTSCHRIFT**

(45) Veröffentlichungstag der Patentschrift:
17.09.86

(51) Int. Cl.⁴: **B 29 C 53/56**

(21) Anmeldenummer: **84108198.7**

(22) Anmeldetag: **12.07.84**

(54) **Gegenstand mit einem durch eine Schlaufe befestigten Anschlusselement.**

(30) Priorität: **02.08.83 DE 3327803**

(43) Veröffentlichungstag der Anmeldung:
**13.02.85 Patentblatt 85/7**

(45) Bekanntmachung des Hinweises auf die Patenterteilung:
**17.09.86 Patentblatt 86/38**

(84) Benannte Vertragsstaaten:
**FR GB IT SE**

(56) Entgegenhaltungen:
**DE - A - 2 846 587**
**DE - B - 2 636 306**
**FR - A - 2 292 569**

(73) Patentinhaber: **Messerschmitt-Bölkow-Blohm**
**Gesellschaft mit beschränkter Haftung,**
**Robert-Koch-Strasse, D-8012 Ottobrunn (DE)**

(72) Erfinder: **Drachenberg, Franz, Brunnenstrasse 61,**
**D-8011 Baldham (DE)**
Erfinder: **Oefner, Walter, Kistlerweg 2,**
**D-8151 Mitterdarching (DE)**

## Beschreibung

Die Erfindung betrifft einen Gegenstand gemäss dem Oberbegriff des Patentanspruchs 1, insbesondere aus Kunststoff.

Bei der Fertigung solcher Gegenstände aus Faserverbundkunststoff, beispielsweise einer Steuerstange mit an beiden Enden angesetzten metallenen Lagerbuchsen, wird erst im Anschluss an das Aufbringen von uniaxialen Fassersträngen für die jeweilige Endschlaufe in einem gesonderten Arbeitsgang deren Bandagierung mit der Radialwicklung durchgeführt. Das ist zeitaufwendig bzw. dem Bestreben nach hoher Wirtschaftlichkeit der Fertigung abträglich.

Die Aufgabe der Erfindung ist daher eine Gestaltung solcher Gegenstände derart, dass das Befestigen des jeweiligen Anschlusselementes, d.h. die Schlaufen- und Wicklungsbildung in einem einzigen Arbeitsgang möglich ist.

Diese Aufgabe ist gemäss dem Kennzeichen des Patentanspruchs 1 gelöst, denn die gewählte – zugleich zu einem innigeren Verbund führende, also festigkeitserhöhende – Umschlingung der Wicklungswindungen durch die Schlaufenstränge vorzugsweise in der im Anspruch 2 gekennzeichneten Weise gestattet den gleichzeitigen Einsatz mehrerer Fadenführungs- bzw. Materiallegevorrichtungen, die bloss in ihren unterschiedlichen Bewegungen aufeinander abzustimmen sind. Das wird nachfolgend anhand eines Ausführungsbeispiels der Erfindung verdeutlicht. Hierzu zeigt die Zeichnung in

Fig. 1 Fadenführungs- und -legevorrichtungen bei der Befestigung einer Buchse an einer Stange,

Fig. 2 vergrössert Einzelheiten der Fig. 1,

Fig. 3 eine alternative Ausführungsform der in Fig. 1 und 2 dargestellten Befestigung von Stange und Buchse.

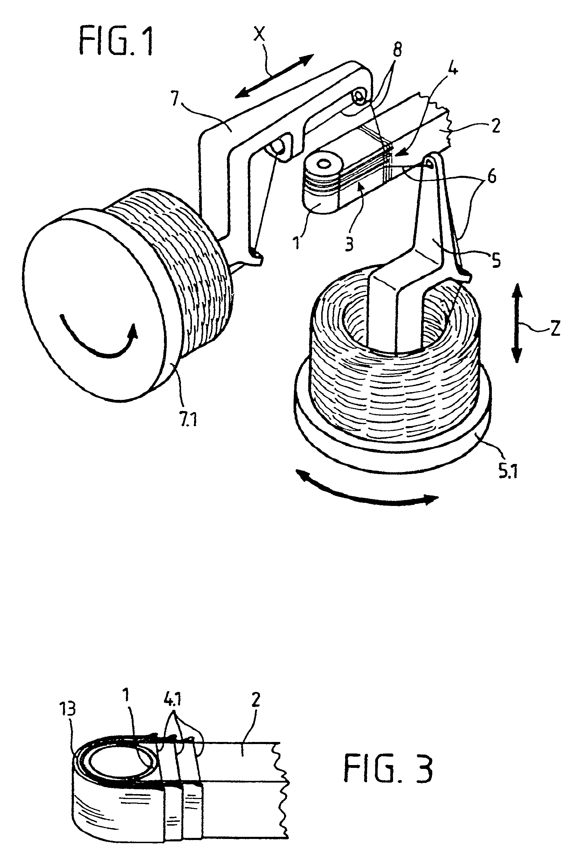

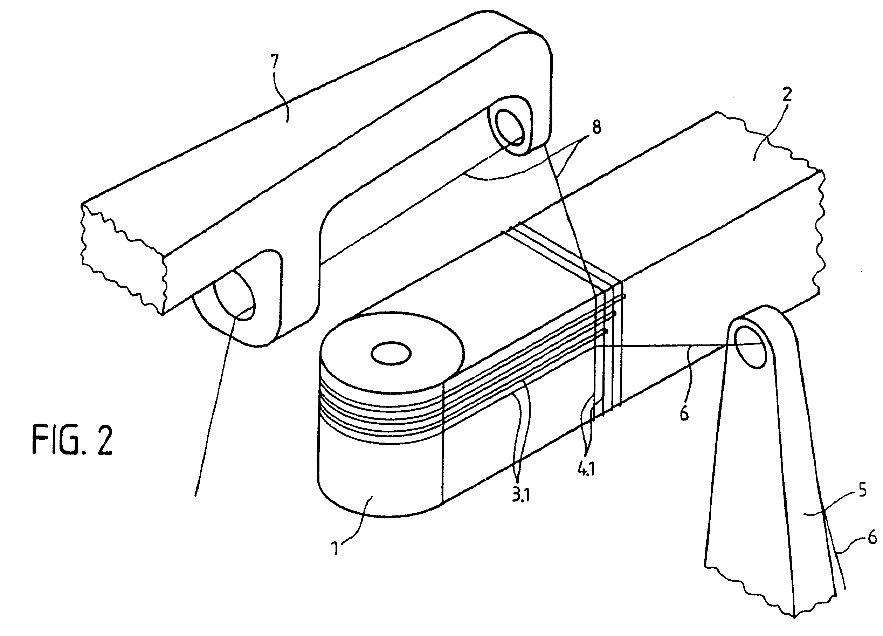

Zur Befestigung einer Metallbuchse 1 am entsprechend konkav geformten Ende einer Kunststoffstange 2 mittels z.B. mit einem Bindemittel, wie Kunstharz, bereits getränkter Faserstränge aus Glasfasern o. dgl. wird hieraus gemäss Fig. 1 und 2 eine unter Umschlingung der Metallbuchse 1 in Axialrichtung der Kunststoffstange 1 sich erstreckende Endschlaufe 3 gebildet sowie eine Radialwicklung 4, deren Windungen 4.1 von den hier jeweils (um 180°) gewendeten Endschlaufensträngen 3.1 umschlungen werden. Dabei sind die Endschlaufenstränge 3.1 nur Abschnitte eines über eine kurbelartige Fadenführungs- und -legevorrichtung 5 ununterbrochen aufgebrachten Faserstranges 6. Diese Fadenführungs- und -legevorrichtung 5 braucht ausser Vorschubbewegungen in der angegebenen Z-Richtung mit dem angegebenen Drehsinn nur hin- und hergehende Winkelbewegungen soweit auszuführen, bis an der jeweiligen Stabseite mit dem Faserstrang 6, und zwar durch Wenden beim Übergreifen eines durch eine zweite Fadenführungs- und -legevorrichtung 7 gleichzeitig aufgebrachten Faserstranges 8 für die Radialwicklung 4, eine die betreffende Wicklungswindung 4.1 erfassende Schlinge bildbar ist. Die für die Radialwicklung 4 bestimmte

Fadenführungs- und -legevorrichtung 7 führt dabei, ausser Vorschubbewegungen in der angegebenen X-Richtung, mit dem angegebenen Drehsinn Drehbewegungen aus. Durch entsprechendes gleichzeitiges (u.U. manuelles) Betätigen der Treibscheiben 5.1 und 7.1 der (in jeder geeigneten Weise lagerbaren) Fadenführungs- und -legevorrichtungen 5 bzw. 7 wird folglich in einem einzigen Arbeitsgang die Metallbuchse 2 an der Kunststoffstange 1 sicher befestigt.

Wie Fig. 3 zeigt, ist ein Kunststoff-Gegenstand gemäss der Erfindung nicht auf einen Faserstrang beschränkt für den Aufbau einer Endschlaufe 13, d.h. stattdessen kann hierfür ebenso ein der Breite der Metallbuchse 1 entsprechendes Faserband verwendet werden, welches dann (wie der einzelne Faserstrang 6 gemäss Fig. 1) an der jeweiligen Wendestelle durch Wicklungswindungen 4.1 an die Kunststoffstange 2 gebunden wird. Der in Fig. 3 dargestellte mehrlagige Aufbau der Endschlaufe 13 ist natürlich entsprechend auch bei derjenigen gemäss Fig. 1 realisierbar, welche bloss Grundsätzliches der Erfindung verdeutlichen soll. Hier können z.B. zur Endschlaufenbildung auch gleichzeitig zwei Faserstränge 6 aufgebracht werden beginnend jeweils an einem Metallbuchsenende.

## Patentansprüche

1. Gegenstand von relativ grosser Länge gegenüber seinem Durchmesser, wie Stab, Stange, Rohrkörper, Welle u. dgl., mit wenigstens einem durch Umschlingung mit einer in Axialrichtung sich erstreckenden Endschlaute (3, 13) aus Fassersträngen (6) o. dgl. befestigten Anschlusselement (1) unter Verankerung derselben mittels einer Radialwicklung (4), dadurch gekennzeichnet, dass die Stränge (3.1) der Endschlaufe (3) zu durch jeweils eine Windung (4.1) der Radialwicklung (4) gebundenen Schlingen zusammengefasst sind.

2. Gegenstand nach Anspruch 1, dadurch gekennzeichnet, dass die Endschlaufe (3) aus mindestens einem ununterbrochenen, an den Windungen (4.1) der Radialwicklung (4) jeweils gewendeten Strang (6) oder Band aufgebaut ist.

## Claims

1. An object of relatively great length as compared with its diameter, such as a bar, rod, tube body, shaft and the like, with at least one connection element (1) fastened by looping around with an end sling (3, 13), which extends in the axial direction and consists of fibre strands (6) or the like, anchorage of same being accomplished by means of a radial winding (4), characterised in that the strands (3.1) of the end sling (3) are combined into loops each tied by a respectively turn (4.1) of the radial winding (4).

2. An object according to claim 1, characterised in that the end sling (3) is built up from at least one uninterrupted strand (6) or band respectively

## Revendications

1. Objet de longueur relativement grande par rapport à son diamètre, tel que barre, tige, corps tubulaire, arbre et analogue, comportant au moins un élément de raccordement (1) fixé par adaptation autour de lui d'un ceinturage d'extrémité (3-13) en écheveaux de fibres (6) ou analogues s'étendant dans le sens axial et ancrage de ceux-ci au moyen d'un enroulement radial (4), caractérisé par le fait que les écheveaux (3.1) du ceinturage d'extrémité (3) sont réunis en boucles respectivement liées par une spire (4.1) de l'enroulement radial (4).

2. Objet selon la revendication 1, caractérisé par le fait que le ceinturage d'extrémité (3) est constitué par au moins un écheveau (6) ou ruban ininterrompu à chaque fois inversé au niveau des spires (4.1) de l'enroulement radial (4).

FIG. 1

X

8

7

4

2

6

7.1

1

3

5

Z

5.1

13

1

4.1

2

FIG. 3

FIG. 2